# EUROPEAN PATENT APPLICATION

(11) **EP 4 734 652 A1**
(43) Date of publication of application: **29.04.2026**
(21) Application number: 25182110.4
(22) Date of filing: 11.06.2025
(51) Int. Cl.: H04W 84/12, H04B 7/06, H04W 8/00, H04W 48/16

(54) **COMMUNICATION METHOD AND SYSTEM USING MILLIMETER WAVES**

(30) Priority: 23.10.2024 TW 113140367
(71) Applicant: Alpha Networks Inc., 300094 Hsinchu (TW)
(72) Inventor: SU, Shih-Chieh, 300094 Hsinchu (TW); CHENG, Yi-Peng, 300094 Hsinchu (TW); YANG, Chia-Ying, 300094 Hsinchu (TW); LIN, Ming-Feng, 300094 Hsinchu (TW)
(74) Representative: V.O.

(57) **Abstract**

A communication method using millimeter waves is implemented by a communication system (1) that stores a zone table (60) and a polling table, the zone table (60) including multiple zone datasets corresponding respectively to multiple communication zones. The method includes steps of: for each communication zone, the communication system (1) setting an emission configuration based on the zone dataset that corresponds to the communication zone; the communication system (1) emitting, based on the zone table (60), multiple delayed beacon frames to the communication zones according to the emission configurations, respectively, where each of the delayed beacon frames indicates a preset delayed time according to the polling table; and for one of the communication zones being polled by the communication system (1), the communication system (1) entering a PCF mode so as to perform data transmission with the accessible terminal device (3) in the communication zone.

## Description

The disclosure relates to a communication method and a communication system, and more particularly to a communication method that uses millimeter waves, and a communication system implementing the same.

A conventional Wi-Fi network typically uses an omnidirectional antenna to broadcast signals over a wide area. However, using the omnidirectional antenna for long-distance communication may lead to signal attenuation, causing reduction in connection quality. As a result, the data transfer rate must be lowered to maintain the connection.

Millimeter wave technology is a critical tool in 5G communication, offering significant advantages. With its broad spectrum, millimeter wave technology supports high-speed and large-capacity data transmission, and can effectively address the growing data demand, even in dense communication environments. In addition, millimeter wave technology enables low-latency communication, which is essential for scenarios requiring high immediacy. More importantly, an antenna array using millimeter wave technology can generate directional beams, thereby providing higher gain and effectively compensating for signal attenuation over longer distances.

However, when replacing the omnidirectional antenna with a millimeter wave antenna array to improve long-distance transmission, there is still a line-of-sight (LOS) characteristic to be taken into account, since in the conventional Wi-Fi network, antennas transmit and receive signals uniformly in all directions. In addition, in the case that the millimeter wave antenna array generates narrow-angle beams, it can only support data transmission in a small, specific area, and in the case that the millimeter wave antenna array generates wide-angle beams, even though the coverage angle is increased, the transmission distance is decreased. Therefore, even if the millimeter wave antenna array transmits in all directions, there may still be signal loss or connectivity interruption.

Therefore, an object of the disclosure is to provide a communication method and system that can alleviate at least one of the drawbacks of the prior art.

According to an aspect of the disclosure, there is provided a communication method using millimeter waves according to claim 1.

According to another aspect of the disclosure, there is provided a communication system for communicating using millimeter waves according to claim 10.

Other features and advantages of the disclosure will become apparent in the following detailed description of the embodiment(s) with reference to the accompanying drawings. It is noted that various features may not be drawn to scale.
Figure 1 is a diagram illustrating a communication system according to an embodiment of the disclosure.
Figure 2 is a flow chart illustrating a communication method according to an embodiment of the disclosure.
Figure 3 is a flow chart illustrating a zone scanning procedure according to an embodiment of the disclosure.
Figure 4 is a flow chart illustrating a data transmission procedure according to an embodiment of the disclosure.
Figure 5 is a schematic diagram illustrating a plurality of beams that are emitted by an antenna array to a plurality of communication zones, respectively.
Figure 6 is a schematic diagram illustrating a zone table according to an embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

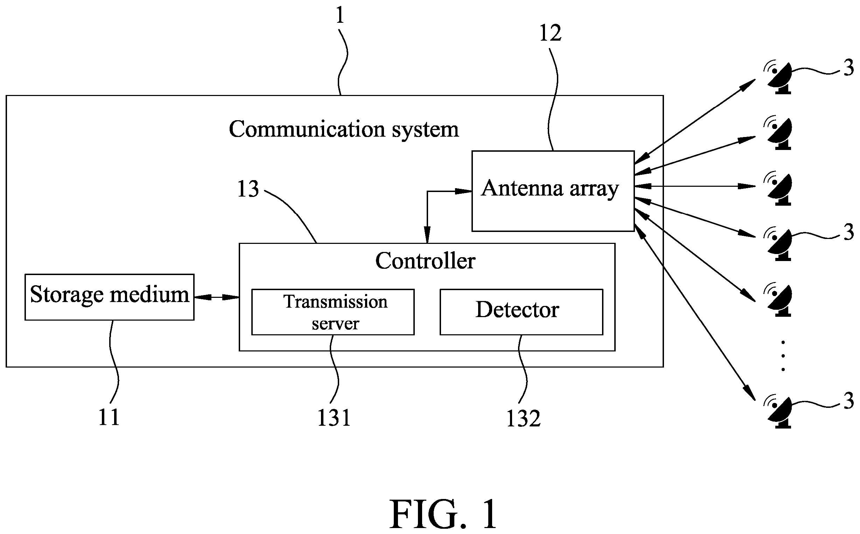

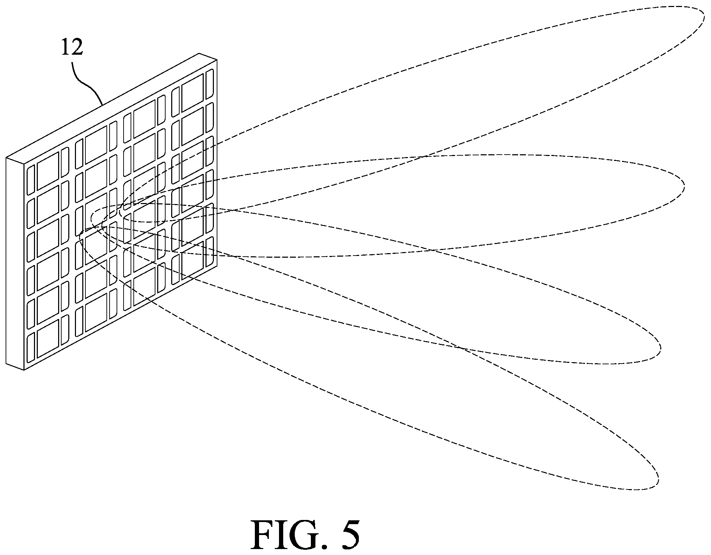

Referring to Figure 1, according to an embodiment of the disclosure, a communication method using millimeter waves is implemented by a communication system 1 that includes a storage medium 11, an antenna array 12 and a controller 13, where the controller 13 is electrically connected to the storage medium 11 and the antenna array 12. In this embodiment, the communication system 1 may be a wireless access point (WAP) that is configured to communicate with at least one terminal device 3 (e.g., a station (STA)). The storage medium 11 may be implemented using random access memory (RAM) or flash memory. The antenna array 12 is a millimeter wave antenna array that is configured to emit a plurality of beams directed toward a plurality of specific zones, respectively, as shown in Figure 5. To describe in further detail, the beams may be viewed as a plurality of independent channels, each of the channels corresponding to one of the specific zones (e.g., a communication zone). That is to say, the antenna array 12 may use the beams to simultaneously serve a plurality of communication zones. The controller 13 includes a transmission server 131 and a detector 132, and may be implemented using a microcontroller.

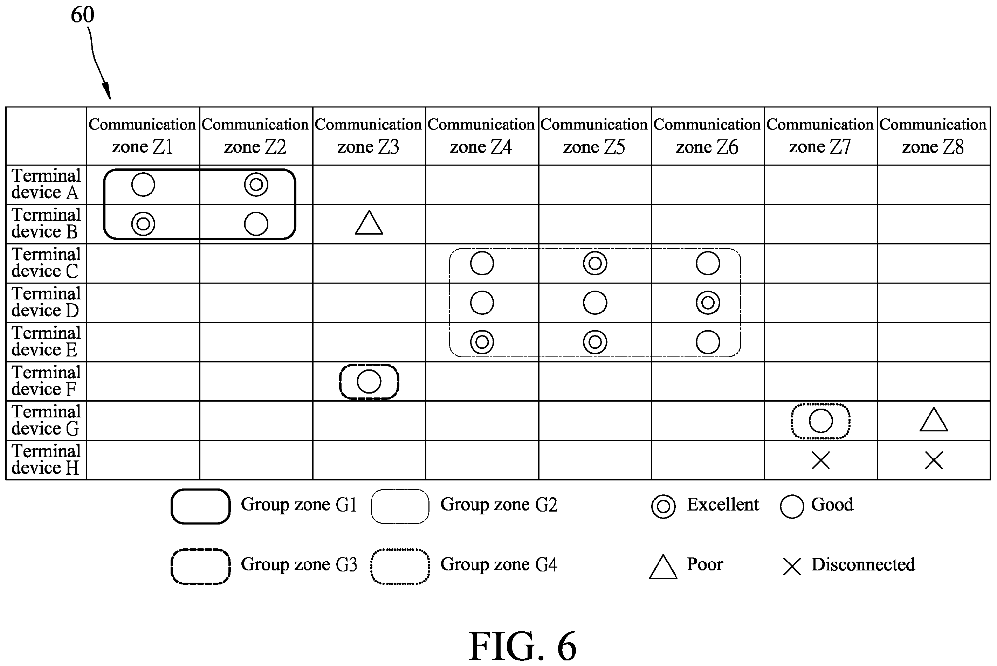

The storage medium 11 stores a zone table 60 as shown in Figure 6, and a polling table (not shown). The zone table 60 may be preset or generated by the controller 13 and is related to a plurality of communication zones. Specifically, the controller 13 controls the antenna array 12 to emit a plurality of beams in a plurality of directions that correspond to the communication zones, respectively. Each of the beams is emitted at a minimum emission angle of the antenna array 12 and at a maximum emission gain of the antenna array 12. The controller 13 then records, for each of any terminal device 3 in the communication zones that is accessible (hereinafter referred to as "accessible terminal device"), a signal strength.

In one example as exemplified in Figure 6, the zone table 60 contains a plurality of zone datasets (e.g., eight zone datasets), each corresponding to one of the communication zones (e.g., eight communication zones Z1, Z2, ..., Z8), and a plurality of group datasets (e.g., four group datasets), each corresponding to one of a plurality of grouped zones (hereinafter referred to as "zone groups", e.g., four zone groups G1, G2, G3 and G4). Each of the zone datasets includes a zone code (e.g., Z1, Z2, ..., Z8) of the corresponding communication zone, and indicates any accessible terminal device 3 that is in the corresponding communication zone (e.g., a terminal device A and a terminal device B are in the communication zone Z1). In other words, each of the zone datasets may include one or more device data pieces that each corresponds to an accessible terminal device 3 (i.e., in the case where there is one or more accessible terminal devices 3 in the communication zone), or may not include any device data piece (i.e., in the case where no accessible terminal device 3 is in the communication zone). Each device data piece includes a name or a code of the corresponding accessible terminal device 3, a signal strength of the corresponding accessible terminal device 3 in the communication zone, and an error rate of the corresponding terminal device 3 in the communication zone.

The signal strength may be represented by a received signal strength indicator (RSSI), and in this embodiment, the signal strength is categorized into four levels: excellent, good, poor, and disconnected. In one embodiment, the signal strength is rated as "Excellent" when a value of the RSSI is greater than -50 decibel relative to one milliwatt (dBm) and not greater than -30 dBm, the signal strength is rated as "Good" when the value of the RSSI is greater than -75 dBm and not greater than -50 dBm, the signal strength is rated as "Poor" when the value of the RSSI is greater than -95 dBm and not greater than -75 dBm, and the signal strength is rated as "Disconnected" when the value of the RSSI is not greater than -95 dBm. The error rate is, for example, a bit error rate (BER).

Each of the group datasets indicates at least one of the communication zones that is(are) in the corresponding zone group, and the accessible terminal device(s) 3 that is(are) in the at least one of the communication zones. In one embodiment, when the controller 13 generates the zone table 60, the controller 13 defines the zone groups based on the value of the RSSI of each of the accessible terminal devices 3 that are indicated in the zone table 60. Specifically, the controller 13, using the device data pieces in the zone datasets from the zone table 60, groups the communication zones that meet the following conditions into a zone group: they are spatially adjacent, and each has one or more accessible terminal device 3 therein with a signal strength rated as "Good" or "Excellent". It should be noted that, the controller 13 may also designate as a zone group only one of the communication zones that has one or more accessible terminal device 3 therein with a signal strength rated as "Good" or "Excellent" (e.g., designating the communication zone Z3 as a zone group).

In one example as exemplified in Figure 6, the signal strength of the terminal device A is "Good" in the communication zone Z1 and is "Excellent" in the communication zone Z2, and the signal strength of the terminal device B is "Excellent" in the communication zone Z1 and is "Good" in the communication zone Z2. In this case, the communication zone Z1 and the communication zone Z2 are grouped together as a zone group G1. In short, the zone group G1 includes the terminal device A and the terminal device B. Since the zone group G1 includes two terminal devices 3, the antenna array 12 may be configured by the controller 13 such that the modulation is set to MCS10, the antenna power is set to 20 dBm, and the antenna angle is set to 10 degrees, to serve both terminal devices 3 simultaneously.

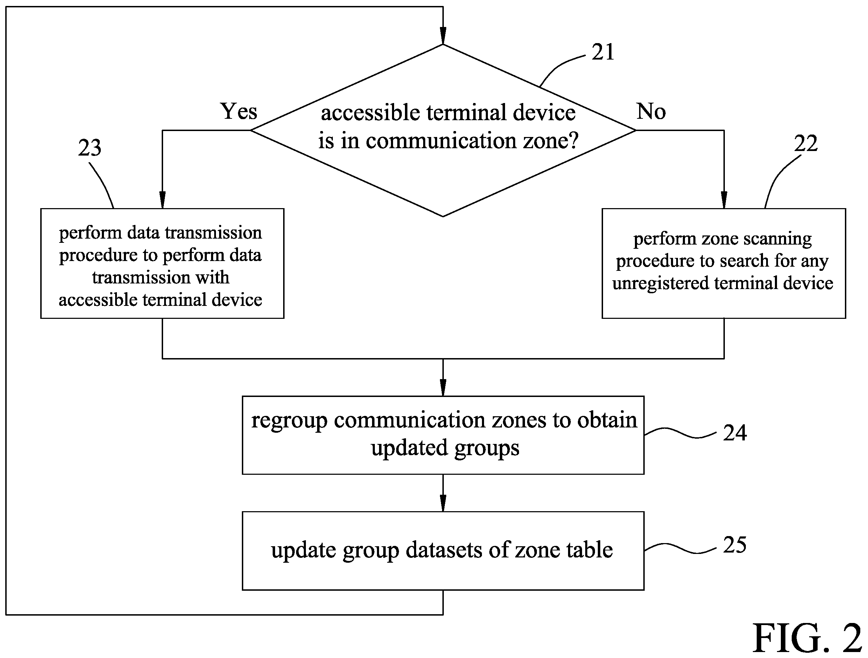

Referring to Figures 1, 2 and 6, the communication method according to an embodiment of the disclosure includes steps 21 to 25.

In step 21, for each of the communication zones, the controller 13 determines whether an accessible terminal device 3 is in the communication zone based on the zone table 60. In response to determining that no accessible terminal device 3 or only the accessible terminal device(s) 3 rated as "Disconnected" or "Poor" is in the communication zone, the controller 13 identifies the communication zone as an inactive zone (e.g., communication zone Z8). In response to determining that any accessible terminal device 3 rated as "Excellent" or "Good" is in the communication zone, the controller 13 identifies the communication zone as an active zone (e.g., communication zones Z1-Z7).

In step 22, for each of the inactive zone(s) identified in step 21, the controller 13 performs a zone scanning procedure to search for any unregistered terminal device. It is noted that the unregistered terminal device is a terminal device 3 that has not yet established connection with the communication system 1 (i.e., has not been registered by the communication system 1).

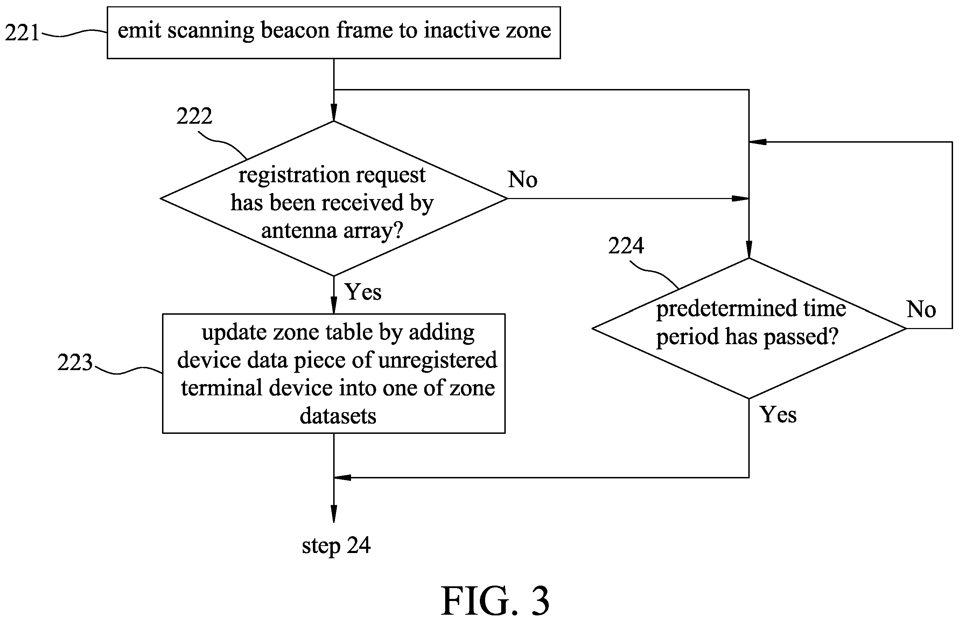

Referring further to Figure 3, step 22 includes sub-steps 221 to 224. In sub-step 221, the transmission server 131 controls the antenna array 12 to emit a scanning beacon frame to the inactive zone according to an initial emission configuration. In this embodiment, the initial emission configuration has an angle of emission that is a minimum emission angle of the antenna array 12, and a gain of emission that is a maximum emission gain of the antenna array 12.

In sub-step 222, the detector 132 continuously determines whether a registration request has been received via the antenna array 12 from an unregistered terminal device, where the registration request is sent by the unregistered terminal device in response to receiving the scanning beacon frame, and includes a device data piece that corresponds to the unregistered terminal device. If the determination in sub-step 222 is affirmative, the flow proceeds to sub-step 223; otherwise, the detector 132 proceeds to make the determination in sub-step 224 and also continues to determine whether a registration request has been received.

In sub-step 223, in response to determining that a registration request has been received, the detector 132 accepts the registration request, and updates the zone table 60 by adding the device data piece that corresponds to the unregistered terminal device into one of the zone datasets that corresponds to the inactive zone. As such, the unregistered terminal device is now an accessible terminal device 3, and the zone dataset that corresponds to the inactive zone now includes the device data piece of this new accessible terminal device 3. Moreover, the detector 132 adds the device data piece into the polling table.

To describe in further detail, the scanning beacon frame includes system information related to the communication system 1, and the antenna array 12 is configured to emit the scanning beacon frame in the inactive zone. When an unregistered terminal device in the inactive zone receives the scanning beacon frame, the unregistered terminal device obtains decoded information (including the system information) by decoding the scanning beacon frame, and in response to determining that the communication system 1 is on a connectable list pre-stored in the unregistered terminal device based on the decoded information, the unregistered terminal device sends the registration request to the communication system 1 to request for establishing a connection with the communication system 1. As such, the detector 132 may determine whether a device (i.e., the unregistered terminal device 3) in the inactive zone is attempting to establish a connection with the communication system 1 through the scanning beacon frame that is emitted by the antenna array 12.

In sub-step 224, the detector 132 continuously determines whether a predetermined time period has passed. The predetermined time period may be three times of a target beacon transmission time (TBTT) from the time the scanning beacon frame is emitted. In one example, one TBTT is equal to 102 ms, and thus the predetermined time period is equal to 306 ms, but the disclosure is not limited to such. If the determination in sub-step 224 is affirmative, the flow of the method proceeds to step 24, and at the same time, the detector 132 stops determining whether a registration request has been received; otherwise, sub-step 224 is repeated. That is to say, after emitting the scanning beacon frame for the predetermined time period, if no registration request has been received, or a registration request has been received and sub-step 223 has been completed, the flow of the method proceeds to step 24. In one embodiment, step 24 is performed after steps 22 or 23 has been performed for all of the communication zones. In another embodiment, step 24 is performed right after step 22 has been completed.

It should be noted that the zone scanning procedure may also be performed under special circumstances, such as when a terminal device that was originally accessible has been disconnected, allowing the terminal device to be reconnected. In one example, Wi-Fi transmission is affected by "rain fading" on rainy days, causing problems such as decreased signal quality, signal instability, and intermittent connections. Therefore, the controller 13 may be configured to perform the zone scanning procedure more frequently (e.g., by shortening the predetermined time period to one or two times of the TBTT) on a rainy day to ensure data transmission stability.

In step 23, for each of the active zone(s) identified in step 21, the controller 13 performs a data transmission procedure based on the zone table 60 and the polling table, so as to perform data transmission with the accessible terminal device(s) 3 in the active zone. The polling table indicates a beacon interval, a sequence of polling for the active zone(s) (e.g., communication zones Z1-Z7), the zone dataset(s) respectively of the active zone(s), etc. In the following description, the communication zones Z1-Z7 are considered as the active zones as an example.

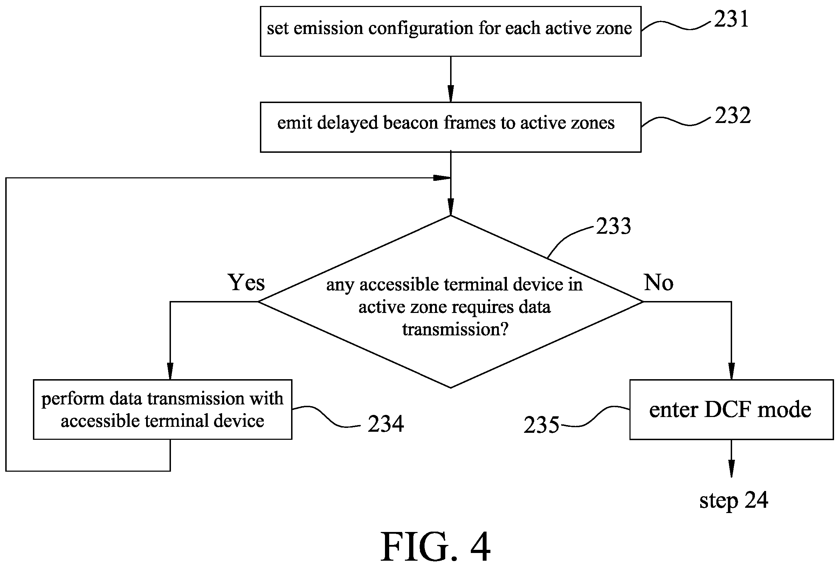

Referring further to Figure 4, step 23 includes sub-steps 231 to 235. In sub-step 231, the transmission server 131 sets, for each of the active zones, an emission configuration that corresponds to the active zone for the antenna array 12 based on the zone table. It should be noted that the emission configuration is set based on the signal strength(s) of the accessible terminal device(s) 3 indicated in the zone dataset that corresponds to the active zone, where the emission configuration includes an angle of emission and a gain of emission, data transmission rates and multiple input multiple output (MIMO) settings, etc.

In one embodiment, the signal strength is considered as strong when the value of the RSSI is greater than -30 dBm, the signal strength is considered as medium when the value of the RSSI is not greater than -30 dBm and is greater than -50 dBm, and the signal strength is considered as weak when the value of the RSSI is smaller than -50 dBm. In one example, when the signal strength is strong, the angle of emission is set to be large (e.g., 60 degrees) and the gain of emission is set to be small (e.g., 41 dBm), so that the beam emitted by the antenna array 12 may cover a wider range. In another example, when the signal strength is weak, the angle of emission is set to be small (e.g., 12.5 degrees) and the gain of emission is set to be large (e.g., 48 dBm), so that the communication with the accessible terminal device(s) 3 may be maintained. In one embodiment, the transmission server 131 uses a multi-user multiple input multiple output (MU-MIMO) wireless communication technology.

In sub-step 232, the transmission server 131 controls the antenna array 12 to emit a plurality of delayed beacon frames to the active zones according to the emission configurations, respectively. The accessible terminal device(s) 3 in each of the active zones thus receives the delayed beacon frame that corresponds to the active zone. Generally speaking, each of the delayed beacon frames indicates a preset delayed time (i.e., the beacon interval) for the corresponding active zone according to the polling table, and the preset delayed times differ among the delayed beacon frames. In one example, the preset delayed time indicated in the delayed beacon frame that is sent to the communication zone Z1 is set to 1 ms, the preset delayed time indicated in the delayed beacon frame that is sent to the communication zone Z2 is set to 2 ms, and so on. That is to say, depending on the order of the active zones indicated in the polling table, the later the active zone is in the polling table, the longer the corresponding preset delayed time will be set to. As such, the accessible terminal devices 3 that are not being polled yet would not emit signals to cause interference to the accessible terminal device(s) 3 in the active zone that is being polled.

In sub-step 233, for one of the active zones that is being polled, the transmission server 131 determines whether any of the accessible terminal device(s) 3 in the active zone requires data transmission based on the zone table 60. In one embodiment, the transmission server 131 enters a Point Coordination Function (PCF) mode to coordinate communications within the active zone to achieve data transmission. Generally speaking, the communication system 1 may control the preset delayed time indicated in the delayed beacon frame according to the quantity of the active zones. Furthermore, by adjusting the duration of the PCF mode, the accessible terminal devices 3 in the active zones can be ensured to complete data transmission in sequence within their specified times.

Specifically, based on the device data piece(s) included in the zone dataset that corresponds to the active zone, the transmission server 131 sequentially sends a query to each of the accessible terminal device(s) 3 in the active zone to determine whether data transmission is required. When the accessible terminal device 3 that receives the query replies that data transmission is required, the transmission server 131 performs sub-step 234, and then the flow goes back to sub-step 233. When the accessible terminal device 3 that receives the query replies that data transmission is not required, the flow goes back to sub-step 233 so that the transmission server 131 sends the query to the next accessible terminal device 3 in the sequence. When the last accessible terminal device 3 in the sequence replies that data transmission is not required, or when sub-step 234 has already been performed for the last accessible terminal device 3 in the sequence, the flow proceeds to sub-step 235.

In sub-step 234, the transmission server 131 performs data transmission with the accessible terminal device 3 based on the zone table 60.

In this embodiment, for those of the zone groups that include at least two communication zones which are spatially adjacent to each other and that have at least one accessible terminal device 3 therein with a signal strength of "Good" or "Excellent", for each of the zone groups, the transmission server 131 may set the antenna array 12 to communicate with the at least one accessible terminal device 3 in the zone group using an identical data rate (e.g., High Throughput 20 MHz (HT20), HT40, HT60, or HT160) and an identical modulation and coding scheme (MCS) (e.g., one of MCS0 to MCS11). That is to say, for each of the zone groups, the emission configuration is set to be identical for those of the communication zones within the zone group.

In one example as exemplified in Figure 5, the antenna array 12 generates four beams to serve four zone groups, respectively, where the four beams may have different data rates and MCSs from each other. Under such configuration, even though generating four independent directional beams may sacrifice the signal strength of each of the beams, the communication system 1 is able to serve four zone groups simultaneously, which not only simplifies operation but also increases the overall network traffic of the communication system 1. By implementing this mechanism, the time required to poll the communication zones is shortened, allowing the polling process to be completed more efficiently. To put it simply with another example, an 8x8 antenna array may be viewed as two 8x4 antenna arrays, each emitting a beam at a direction that is different from another (e.g., one emitting a beam to the left and another one emitting a beam to the right), so that two beams simultaneously serve two communication zones. The quantity of the beams may be increased, but the increase in beam quantity may result in a reduction in transmission power. In another example, an 8x8 antenna array may be viewed as four 4x4 antenna arrays, and so on.

In sub-step 235, the transmission server 131 enters a Distributed Coordination Function (DCF) mode for a preset duration. In the DCF mode, each of any of the accessible terminal device(s) 3 that is in the active zone may send a data transmission request to the transmission server 131 to compete for data transmission priority. In one embodiment, the transmission server 131 in the DCF mode may also perform the zone scanning procedure to search for any unregistered terminal device 3 in another one of the communication zones (e.g., any of the inactive zone(s)), and then the flow proceeds to step 24. When performing the zone scanning procedure, the transmission server 131 adjusts a direction where the antenna array 12 points at (i.e., toward the another one of the communication zones), and controls the antenna array 12 to emit the scanning beacon frame to the another one of the communication zones according to an emission configuration that has a narrower angle of emission and a higher gain of emission. Since a time duration required for performing the zone scanning procedure is short, the transmission server 131 is able to complete the zone scanning procedure while in the DCF mode. If the transmission server 131 receives a registration request from an unregistered terminal device 3, the transmission server 131 accepts the registration request and updates the zone table 60 as mentioned previously. When the DCF mode ends, the flow proceeds to step 24.

In this embodiment, the transmission server 131 uses Media Access Control (MAC) extension technologies to optimize data transmission and reception. Specifically, the transmission server 131 employs Transmission Opportunity (TXOP), Hybrid Coordination Function Controlled Channel Access (HCCA) under the PCF mode, and Enhanced Distributed Channel Access (EDCA) under the DCF mode.

In one example, the zone table 60 includes the zone datasets (e.g., a first zone dataset that corresponds to the communication zone Z1, a second zone dataset that corresponds to the communication zone Z2, etc.). Each of the zone datasets may or may not include any device data piece. The controller 13 determines, based on the zone datasets, whether each of the communication zones is an active zone or an inactive zone. For each of those of the communication zones that is determined to be an inactive zone, the controller 13 performs the zone scanning procedure for the communication zone based on the corresponding zone dataset. For each of those of the communication zones that is determined to be an active zone, the controller 13 performs the data transmission procedure for the communication zone based on the corresponding zone dataset.

Since the zone table 60 may be updated in sub-steps 223 or 235 (e.g., registration of a new accessible terminal device 3), in step 24, the detector 132 regroups the communication zones included in the zone table 60 that has been updated in sub-steps 223 or 235, so as to obtain a plurality of updated groups. Each of the updated groups includes at least one of the communication zones.

In this embodiment, the controller 13 performs a zone optimization task to regroup the communication zones based on the signal strengths (i.e., the value of the RSSI) of the accessible terminal devices 3 that are indicated in the zone table 60. To describe in further detail, the communication zones are regrouped in step 24 such that those of the communication zones having the same accessible terminal device 3 therein are grouped into a zone group. In addition, for any zone group, a difference in signal strength among different accessible terminal devices 3 in the communication zones of the zone group is less than a threshold value (e.g., 5 dBm). However, the threshold value is not limited to such.

In one embodiment, when a signal strength of an accessible terminal device 3 in one of the zone groups decays (e.g., the signal strength drops below -50 dBm), the controller 13 removes the accessible terminal device 3 with a decayed signal strength (hereinafter referred to as "decayed terminal device") from the zone group, and adds a new zone group to the zone groups, where the new zone group includes the decayed terminal device. As such, the controller 13 may use another data rate and MCS to maintain communication with the decayed terminal device. Moreover, when multiple accessible terminal devices 3 are in close spatial proximity, but the power of one of the accessible terminal devices 3 is too high and affects the performance of other accessible terminal devices 3 or the communication system 1, the controller 13 may send a notification to notify the accessible terminal device 3 with excessive power (e.g., greater than -30 dBm) to reduce its power to facilitate grouping.

In one example as shown in Figure 6, a zone dataset that corresponds to the communication zone Z1 includes device data piece 1A that corresponds to the terminal device A and device data piece 1B that corresponds to the terminal device B, where the device data piece 1A indicates a signal strength (e.g., an RSSI value) of -51 dBm, and the device data piece 1B indicates a signal strength of -48 dBm. A zone dataset that corresponds to the communication zone Z2 includes device data piece 2A that corresponds to the terminal device A and device data piece 2B that corresponds to the terminal device B, where the device data piece 2A indicates a signal strength of -49 dBm, and the device data piece 2B indicates a signal strength of -52 dBm. A zone dataset that corresponds to the communication zone Z3 includes device data piece 3B that corresponds to the terminal device B and device data piece 3F that corresponds to the terminal device F, where the device data piece 3B indicates a signal strength of -76 dBm, and the device data piece 3F indicates a signal strength of -66 dBm. A zone dataset that corresponds to the communication zone Z4 includes device data piece 4C that corresponds to the terminal device C, device data piece 4D that corresponds to the terminal device D, and device data piece 4E that corresponds to the terminal device E, where the device data piece 4C indicates a signal strength of -51 dBm, the device data piece 4D indicates a signal strength of -52 dBm, and the device data piece 4E indicates a signal strength of -48 dBm. A zone dataset that corresponds to the communication zone Z5 includes device data piece 5C that corresponds to the terminal device C, device data piece 5D that corresponds to the terminal device D, and device data piece 5E that corresponds to the terminal device E, where the device data piece 5C indicates a signal strength of -49 dBm, the device data piece 5D indicates a signal strength of -52 dBm, and the device data piece 5E indicates a signal strength of -49 dBm. A zone dataset that corresponds to the communication zone Z6 includes device data piece 6C that corresponds to the terminal device C, device data piece 6D that corresponds to the terminal device D, and device data piece 6E that corresponds to the terminal device E, where the device data piece 6C indicates a signal strength of -52 dBm, the device data piece 6D indicates a signal strength of -48 dBm, and the device data piece 6E indicates a signal strength of -51 dBm. A zone dataset that corresponds to the communication zone Z7 includes device data piece 7G that corresponds to the terminal device G and device data piece 7H that corresponds to the terminal device H, where the device data piece 7G indicates a signal strength of -70 dBm, and the device data piece 7H indicates a signal strength of -96 dBm. A zone dataset that corresponds to the communication zone Z8 includes device data piece 8G that corresponds to the terminal device G and device data piece 8H that corresponds to the terminal device H, where the device data piece 8G indicates a signal strength of -80 dBm, and the device data piece 8H indicates a signal strength of -97 dBm.

Since the zone dataset that corresponds to the communication zone Z1 and the zone dataset that corresponds to the communication zone Z2 both include the device data piece that corresponds to the terminal device A and the device data piece that corresponds to the terminal device B, and a difference between two signal strengths indicated by two of the device data pieces (e.g., 1B and 2A) is less than the threshold value (e.g., 5 dBm), the communication zone Z1 and the communication zone Z2 are grouped into a zone group. Similarly, the communication zone Z4, the communication zone Z5, and the communication zone Z6 are grouped into a zone group. Since no other zone dataset that corresponds to any of the communication zones includes device data pieces that correspond to the terminal device B and the terminal device F as the zone dataset that corresponds to the communication zone Z3 does, the communication zone Z3 is itself grouped as a zone group. Even though the zone dataset that corresponds to the communication zone Z7 and the zone dataset that corresponds to the communication zone Z8 both include the device data piece that corresponds to the terminal device G and the device data piece that corresponds to the terminal device H, since a difference between two signal strengths indicated by two of the device data pieces (e.g., 7G and 8G) is not less than the threshold value, the communication zone Z7 is itself grouped as a zone group.

In step 25, the controller 13 updates the group datasets of the zone table 60 based on the updated groups obtained in step 24, and the flow of the method goes back to step 21.

In summary, according to the disclosure, the controller 13 determines whether each of the communication zones is an active zone or an inactive zone, performs the zone scanning procedure for the inactive zone(s), and performs the data transmission procedure for the active zone(s). The controller 13 further sets the emission configurations for the communication zones, respectively, based on whether the zone scanning procedure is performed, or based on the signal strength(s) of the accessible terminal device(s) 3 in the communication zone. As such, the beams emitted by the antenna array 12 may reach greater distances and may cover necessary angles for connection stability compared to using omnidirectional data transmission. Moreover, when no more accessible terminal device 3 requires data transmission in the active zone, the controller 13 may perform the zone scanning procedure in another one of the communication zones. Furthermore, the controller 13 may set the antenna array 12 to communicate with the accessible terminal device(s) 3 in the same zone group using identical data rate and MCS based on the group datasets, so that the accessible terminal device(s) 3 closer to the antenna array 12 may cooperate with the controller 13 to use MU-MIMO to transmit data, and the accessible terminal device(s) 3 further away from the antenna array 12 may still maintain stable communication with the antenna array 12.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A communication method using millimeter waves to be implemented by a communication system (1), the communication system (1) including a storage medium (11) that stores a zone table (60) and a polling table, an antenna array (12), and a controller (13), the zone table (60) including a plurality of zone datasets corresponding respectively to a plurality of communication zones, each of the plurality of zone datasets indicating any accessible terminal device (3) that is in a corresponding one of the plurality of communication zones, and a signal strength of each of the any accessible terminal device (3), the method being **characterized by**:
A) for each of the plurality of communication zones, the controller (13) setting an emission configuration for the antenna array (12) based on the signal strength of the accessible terminal device (3) indicated in one of the plurality of zone datasets that corresponds to the communication zone, where the emission configuration includes an angle of emission and a gain of emission;
B) the controller (13) controlling the antenna array (12) to, based on the zone table (60), emit a plurality of delayed beacon frames to the plurality of communication zones according to the emission configurations, respectively, where each of the plurality of delayed beacon frames indicates a preset delayed time according to the polling table; and
C) for one of the plurality of communication zones being polled by the controller (13), the controller (13) entering a Point Coordination Function (PCF) mode so as to perform data transmission with the accessible terminal device (3) in the communication zone.

2. The communication method as claimed in claim 1, each of the plurality of zone datasets including any device data piece that corresponds to the any accessible terminal device (3) which is in the corresponding one of the plurality of communication zones, and each of the device data piece including the signal strength of the corresponding accessible terminal device (3), the communication method further comprising a step of:
D) the controller (13) grouping into a zone group those of the plurality of communication zones that have an accessible terminal device (3) therein with a signal strength greater than a predetermined value based on the corresponding device data piece, where those of the plurality of communication zones are spatially adjacent to each other;
wherein in step A), the emission configuration is set to be identical for those of the plurality of communication zones within the zone group.

3. The communication method as claimed in any one of claims 1 and 2, further comprising steps of:
E) for each of the plurality of communication zones, the controller (13) determining whether an accessible terminal device (3) is in the communication zone based on the zone table (60), in response to determining that no accessible terminal device (3) is in the communication zone, identifying the communication zone as an inactive zone, and in response to determining that an accessible terminal device (3) is in the communication zone, identifying the communication zone as an active zone;
F) for each of any of the plurality of communication zones being identified as an active zone, the communication system (1) performing steps A), B) and C); and
G) for each of any of the plurality of communication zones being identified as an inactive zone, the communication system (1) performing a zone scanning procedure to search for any unregistered terminal device that has not been registered by the communication system (1).

4. The communication method as claimed in claim 3, wherein step G) includes sub-steps of:
G1) the controller (13) controlling the antenna array (12) to emit a scanning beacon frame to the communication zone according to an initial emission configuration;
G2) the controller (13) determining whether a registration request has been received from an unregistered terminal device, where the registration request is sent in response to the scanning beacon frame, and includes a device data piece that corresponds to the unregistered terminal device; and
G3) in response to receiving the registration request, the controller (13) updating the zone table (60) by adding the device data piece that corresponds to the unregistered terminal device into one of the plurality of zone datasets that corresponds to the communication zone.

5. The communication method as claimed in claim 4, wherein the initial emission configuration has an angle of emission that is a minimum emission angle of the communication system (1), and a gain of emission that is a maximum emission gain of the communication system (1).

6. The communication method as claimed in any one of claims 4 and 5, the zone table (60) further including a plurality of group datasets corresponding respectively to a plurality of zone groups, each of the plurality of group datasets indicates at least one of the plurality of communication zones that is in the corresponding zone group, and at least one accessible terminal device (3) that is in the at least one of the plurality of communication zones, the method further comprising, after step G), steps of:
H) the controller (13) grouping the plurality of communication zones included in the zone table (60) that has been updated in sub-step G3), so as to obtain a plurality of updated groups, where each of the plurality of updated groups includes at least one of the plurality of communication zones; and
I) the controller (13) updating the plurality of group datasets of the zone table (60) based on the plurality of updated groups.

7. The communication method as claimed in claim 6, each of the plurality of zone datasets including any device data piece that corresponds to the any accessible terminal device (3) which is in the corresponding one of the plurality of communication zones, and each of the device data piece including the signal strength of the corresponding accessible terminal device (3), wherein the plurality of zone datasets are grouped in step H) such that, for any zone group, a difference in signal strength among different accessible terminal devices (3) in the communication zones of the zone group is less than a threshold value.

8. The communication method as claimed in any one of claims 3 to 7, wherein step C) includes sub-steps of:
C1) the controller (13) determining whether the accessible terminal device (3) in the communication zone requires data transmission based on the zone table (60); and
C2) in response to determining that the accessible terminal device (3) in the communication zone requires data transmission, the controller (13) performing data transmission with the accessible terminal device (3) based on the zone table (60).

9. The communication method as claimed in claim 8, wherein step C) further includes a sub-step C3) of, in response to determining that the accessible terminal device (3) in the communication zone does not require data transmission, for any of the plurality of communication zones being identified as an inactive zone in step G), performing the zone scanning procedure to search for any unregistered terminal device that has not been registered by the communication system (1).

10. A communication system (1) for communicating using millimeter waves, comprising:
a storage medium (11) that stores a zone table (60) and a polling table, the zone table (60) including a plurality of zone datasets corresponding respectively to a plurality of communication zones, each of the plurality of zone datasets indicating any accessible terminal device (3) that is in a corresponding one of the plurality of communication zones, and a signal strength of each of the any accessible terminal device (3);
an antenna array (12); and
a controller (13) configured to perform the steps of any of claims 1 to 9.
